# EUROPEAN PATENT APPLICATION

(11) **EP 3 217 587 A1**
(43) Date of publication of application: **13.09.2017**
(21) Application number: 16206995.9
(22) Date of filing: 28.02.2012
(51) Int. Cl.: H04L 1/20, H04W 28/04

(54) **METHOD FOR MEASURING TRANSMISSION ERROR INFORMATION AND NETWORK DEVICE**

(30) Priority: 28.02.2011 CN 201110047824
(62) Divisional of application: 12752336.3
(71) Applicant: Huawei Technologies Co., Ltd., Longgang District Shenzhen, Guangdong 518129 (CN)
(72) Inventor: Zhou, Xun, Shenzhen, Guangdong 518129 (CN); Feng, Xin, Shenzhen, Guangdong 518129 (CN)
(74) Representative: Epping - Hermann - Fischer

(57) **Abstract**

The embodiments of the present invention disclose a method for measuring transmission error information and a network device. The embodiments of the present invention detect and track the reception performances of the physical downlink control channel (PDCCH) and the physical hybrid automatic repeat request indicator channel (PHICH) by measuring transmission error information of the PDCCH and transmission error information of the PHICH, so that the reception statuses of the PDCCH and the PHICH can be timely acquired, for the convenience of further improving the reception performances of the PDCCH and the PHICH subsequently on this basis.

## Description

### CROSS-REFERENCE TO RELATED APPLICATIONS

This application claims priority to Chinese Patent Application No. 201110047824.0, entitled "Method for Measuring Transmission Error Information and Network Device", and filed on February 28, 2011 before the Chinese Patent Office, which is hereby incorporated by reference in its entirety.

### TECHNICAL FIELD

The present invention relates to the field of wireless communication technologies, and specifically, to a method for measuring transmission error information and a network device.

### BACKGROUND

With the development of the wireless access technology, the current mobile communication system cannot meet the requirements of new services. Meanwhile, in order to solve the significant technical disparity between the mobile communication systems of the 3rd-generation (3G, 3rd-generation) mobile communication technology and the 4rd-generation (4G, 4rd-generation) mobile communication technology, the 3rd Generation Partnership Project (3GPP, The 3rd Generation Partnership Project) organization initiates a standardization of the Long Term Evolution (LTE, Long Term Evolution) technology, and improves the spectral efficiency and the communication rate of the system by employing a series of new technologies in the existing 3G frequency band.

Both the physical downlink control channel (PDCCH, Physical Downlink Control Channel) and the physical hybrid automatic repeat request indicator channel (PHICH, Physical Hybrid automatic repeat request Indicator Channel) belong to the downlink physical control channels in the LTE, wherein the PDCCH is used to transmit control information such as uplink scheduling grant and downlink scheduling allocation, and the PHICH is used to transmit Acknowledgment (ACK, Acknowledgment) information or negative acknowledgement (NACK, Negative Acknowledgement) information of the uplink data.

In the studies and practices of the prior art, the inventor of the present invention finds that neither the PDCCH nor the PHICH undergoes a Hybrid Automatic Repeat Request (HARQ, Hybrid Automatic Repeat Request) process, so the eNB cannot directly obtain the transmission error information of the PDCCH and the PHICH, which is not conducive to timely acquirement of reception statuses of the PDCCH and the PHICH, and not conducive to improvement of the reception performances of the PDCCH and the PHICH.

### SUMMARY

The embodiments of the present invention provide a method for measuring transmission error information and a network device, which can measure transmission error information, so as to timely acquire the reception statues of the PDCCH and the PHICH.

The embodiments of the present invention can specifically be implemented through the following technical solutions.

In one aspect, a method for measuring transmission error information is provided, and the method comprises:
transmitting transmission control information to a terminal through a physical downlink control channel (PDCCH); and
determining that the transmission control information is not correctly received by the terminal, and acquiring transmission error information of the PDCCH.

In another aspect, a method for measuring transmission error information is further provided, and the method comprises:
transmitting transmission instruction information to a terminal through a physical hybrid automatic repeat request indicator channel (PHICH); and
determining that the transmission instruction information is not correctly received by the terminal, and acquiring transmission error information of the PHICH.

In one aspect, a network device is provided, and the network device comprises:
a transmitting unit configured to transmit transmission control information to a terminal through a physical downlink control channel (PDCCH); and
a measuring unit configured to determine that the transmission control information is not correctly received by the terminal, and acquire transmission error information of the PDCCH.

In another aspect, a network device is further provided, and the network device comprises:
a transmitting unit configured to transmit transmission instruction information to a terminal through a physical hybrid automatic repeat request indicator channel (PHICH); and
a measuring unit configured to determine that the transmission instruction information is not correctly received by the terminal, and acquire transmission error information of the PHICH.

The embodiments of the present invention detect and track reception performance of the PDCCH or the PHICH by acquiring the transmission error information of the PDCCH or the transmission error information of the PHICH to perform measurement, so that the reception status of the PDCCH or the PHICH can be timely acquired, for the convenience of further improving the reception performance of the PDCCH or the PHICH subsequently on this basis.

### BRIEF DESCRIPTION OF DRAWINGS

FIG. 1 is a flowchart of a method for measuring transmission error information according to an embodiment of the present invention;
FIG. 2 is another flowchart of a method for measuring transmission error information according to an embodiment of the present invention;
FIG. 3 is still another flowchart of a method for measuring transmission error information according to an embodiment of the present invention;
FIG. 4 is yet another flowchart of a method for measuring transmission error information according to an embodiment of the present invention;
FIG. 5a is a structural schematic diagram of a network device according to an embodiment of the present invention; and
FIG. 5b is another structural schematic diagram of a network device according to an embodiment of the present invention.

### DESCRIPTION OF EMBODIMENTS

In order that the objects, technical solutions and advantages of the present invention are clearer, the technical solutions provided by the present invention will be further detailedly described as follows in conjunction with the drawings and the embodiments.

The embodiments of the present invention provide a method for measuring transmission error information and a network device, which will be detailedly described as follows respectively.

This embodiment is a method embodiment of the present invention, and it will be described in the perspective of a network device, which specifically may be an evolution base station or other transmitting station.

A method for measuring transmission error information includes: transmitting transmission control information to a terminal through a PDCCH, or transmitting transmission instruction information to the terminal through a PHICH; determining that the transmission control information is not correctly received by the terminal, and acquiring transmission error information of the PDCCH; or determining that the transmission instruction information is not correctly received by the terminal, and acquiring transmission error information of the PHICH.

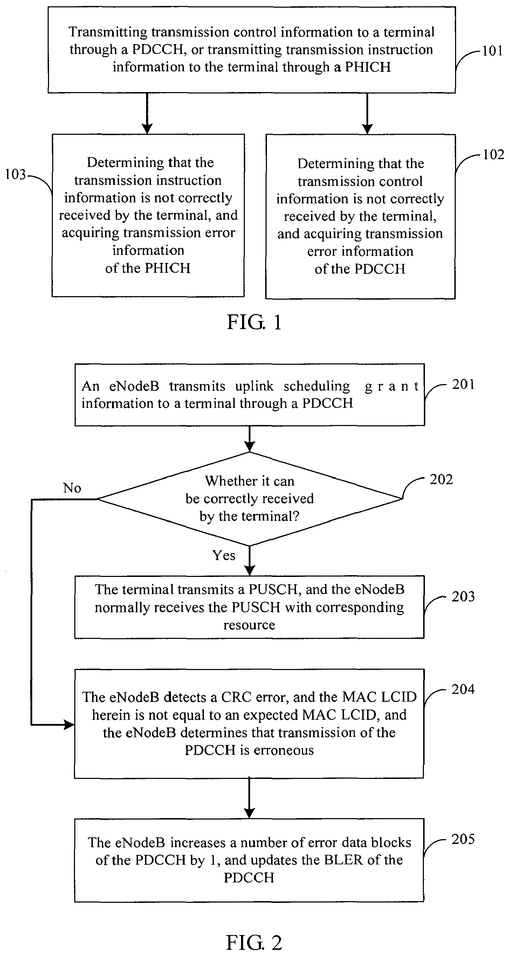

Referring to FIG. 1, the detailed flow may be as follows.

101: Transmitting transmission control information to a terminal through a PDCCH, or transmitting transmission instruction information to the terminal through a PHICH;

In which, the transmission control information may specifically be uplink scheduling grant information or downlink resource allocation information, and the transmission instruction information may specifically be a NACK message or an ACK message.

102: Determining that the transmission control information is not correctly received by the terminal, and acquiring transmission error information of the PDCCH;

For example, when it is determined that the transmission control information is not correctly received by the terminal, a number of error data blocks of the PDCCH may be increased by 1, and a block error rate (BLER, Block Error Rate) of the PDCCH may be updated according to the number of error data blocks of the PDCCH, wherein the BLER may be a ratio between the number of error data blocks of the PDCCH and the total number of the PDCCH data blocks transmitted by the terminal.

In which, the network device may adopt different ways of measurement for different transmission control information, and the details are given as follows.
1) The transmission control information specifically is uplink scheduling grant information.
   That is, when step 101 specifically is "transmitting uplink scheduling grant information to the terminal through the PDCCH", step 102 may be:
   if the uplink scheduling grant information is not correctly received by the terminal, the terminal does not transmit data in the physical uplink shared channel (PUSCH, Physical Uplink Shared Channel), and in that case, the network device detects a cyclic redundancy check (CRC, Cyclic Redundancy Check). Thus, the BLER of the PDCCH may be measured by counting the number of times when a CRC (CRC, Cyclic Redundancy Check) of the PUSCH (PUSCH, Physical Uplink Shared Channel) is erroneous and the number of times when a media access control logic channel identifier (MAC LCID, Media Access Control) does not meet an expected MAC LCID. The details may be as follows:
      It is determined that transmission of the PDCCH is erroneous when an erroneous PUSCH CRC is detected and a MAC LCID does not meet an expected MAC LCID. In that case, the network device acquires the transmission error information of the PDCCH, e.g., the number of error data blocks of the PDCCH may be increased by 1, and the BLER of the PDCCH may be updated according to the number of error data blocks of the PDCCH.
      To be noted, the network device may acquire the range of the MAC LCID transmitted by the terminal, so the network device can obtain the current MAC LCID value through evaluation. In the embodiment of the present invention, the current MAC LCID value obtained through evaluation is referred to as an expected MAC LCID. The so-called "The MAC LCID does not meet the expected MAC LCID" means that the deviation between the actually obtained MAC LCID value and the expected MAC LCID is larger than a certain value which may be set upon the actual application demand, such as to be zero. In which, for the specific manner for the network device to acquire the range of the MAC LCID transmitted by the terminal, please refer to the prior art, and herein is omitted.
2) The transmission control information specifically is downlink resource allocation information.

That is, when step 101 specifically is "transmitting downlink resource allocation information to the terminal through the PDCCH", step 102 may be:
if the downlink resource allocation information is correctly received by the terminal, the terminal receives, with corresponding downlink resource, the data transmitted by the network-side device through the Physical Downlink Shared Channel (PDSCH, Physical Downlink Shared Channel); and if the downlink resource allocation information is not correctly received by the terminal, the terminal does not receive the data transmitted by the network-side device through the PDSCH, but transmits discontinuous transmission (DTX, Discontinuous Transmission) information. Thus, the BLER of the PDCCH may be measured by counting DTX (DTX, Discontinuous Transmission) information returned by the terminal. For example, the DTX information may be transmitted by the terminal on a PUCCH or a PUSCH, wherein the DTX information returned through the PUSCH may be referred to as a channel associated signaling. That is, this step may specifically be as follows:
receiving the DTX information transmitted by the terminal on the PUCCH or the PUSCH, and determining that transmission of the PDCCH is erroneous according to the DTX information. Herein, the network device acquires the transmission error information of the PDCCH, e.g., the number of error data blocks of the PDCCH may be increased by 1, and the BLER of the PDCCH may be updated according to the number of error data blocks of the PDCCH.

103: Determining that the transmission instruction information is not correctly received by the terminal, and acquiring transmission error information of the PHICH.

For example, when it is determined that the transmission instruction information is not correctly received by the terminal, the number of error bits of the PHICH may be increased by 1, and the bit error rate (BER, Bit Error Rate) of the PHICH may be updated according to the number of error bits of the PHICH, wherein the BER of the PHICH refers to a ratio between the number of error bits of the PHICH and the total number of the PHICH bits transmitted by the terminal.

In which, the "the transmission instruction information is not correctly received by the terminal" may be that the network device transmits an ACK but the terminal mistakes it for a NACK, or the network device transmits a NACK but the terminal mistakes it for an ACK. The terminal retransmits the PUSCH (PUSCH, Physical Uplink Shared Channel) with corresponding resource when determining that the received transmission instruction information is a NACK. Thus, in the embodiment of the present invention, the "the transmission instruction information is not correctly received by the terminal" may refer to that a NACK message is not correctly received by the terminal, i.e., being mistaken for an ACK message by the terminal, so that the terminal does not do PUSCH retransmission with corresponding resource. That is:
when step 101 specifically is "transmitting a NACK message to the terminal through the PHICH", step 103 may be:
   if the NACK message is not correctly received by the terminal, the terminal does not retransmit data through the PUSCH, and herein, the network device will detect an erroneous PUSCH CRC, and at this time, the MAC LCID does not meet the expected MAC LCID. Thus, the transmission error information of the PHICH may be acquired according to the number of times when a PUSCH CRC is erroneous and the number of times when a MAC LCID does not meet an expected MAC LCID. The details may be as follows:
      determining that transmission of the PHICH is erroneous when an erroneous PUSCH CRC is detected and the MAC LCID does not meet the expected MAC LCID. In that case, the network device may acquire the transmission error information of the PHICH, e.g., the number of error bits of the PHICH may be increased by 1, and the BER of the PHICH may be updated according to the number of error bits of the PHICH.

From the above content, it can be seen that the embodiment of the present invention detects and tracks the reception performance of the PDCCH or the PHICH by measuring the transmission error information of the PDCCH or the transmission error information of the PHICH, so that the reception status of the PDCCH or the PHICH can be timely acquired, for the convenience of further improving the reception performance of the PDCCH or the PHICH subsequently on this basis. For example, when a BLER or BER is measured, some operations may be triggered according to the measured BLER or BER, so as to improve the reception performance of the PDCCH or the PHICH.

It can be seen that in the embodiment of the present invention, the reception performance of either the PDCCH or the PHICH may be measured at the network device side such as the eNodeB side, according to the reception status of the channel information (e.g., transmission control information or transmission instruction information), so that the eNodeB may timely adjust respective channels (e.g., PDCCH or PHICH) to improve the performance of the whole network.

The method according to the above embodiment will be detailedly described as follows through an example.

In this embodiment, an example is given by specifically taking an evolved NodeB (eNodeB) as the network device, and taking uplink scheduling grant information as the transmission control information. Referring to FIG. 2, the detailed flow may be as follows:
201: An eNodeB transmits uplink scheduling grant information to a terminal through a PDCCH.
202: After receiving the uplink scheduling grant information, the terminal may detect the PDCCH in a UE-specific search space; if the PDCCH is detected as correct, it means that the uplink scheduling grant information can be correctly received by the terminal, and then step 203 is performed; while if the PDCCH is detected as incorrect, it means that the uplink scheduling grant information cannot be correctly received by the terminal, and then step 204 is performed.

To be noted, the terminal detects the PDCCH through a blind detection, i.e., the terminal cannot acquire the specific frequency position of the PDCCH allocated to itself (i.e., the terminal itself), so the terminal needs to search in a search space; if a frequency position can be searched, it means that a PDCCH is allocated to the terminal, and if no frequency position is searched, it means that no PDCCH is allocated to the terminal, wherein the search space has a range appointed in the protocol and can be divided into a UE-specific search space and a common search space. For the details, please refer to the prior art, and herein are omitted.

203: If the uplink scheduling grant information can be correctly received by the terminal, the terminal transmits a PUSCH, and the eNodeB normally receives the PUSCH with corresponding resource. For the details, please refer to the prior art, and herein are omitted.

204: If the uplink scheduling grant information cannot be correctly received by the terminal, the terminal does not transmit the PUSCH, and herein, the eNodeB detects a CRC error with the PUSCH resource allocated to the terminal, and the MAC LCID at this time is not equal to the expected MAC LCID, thus the eNodeB determines that transmission of the PDCCH is erroneous, and then step 205 is performed.

205: the eNodeB increases a number of error data blocks of the PDCCH by 1, and updates a BLER of the PDCCH according to the number of error data blocks of the PDCCH.

From the above content, it can be seen that the embodiment of the present invention detects and tracks the reception performance of the PDCCH by measuring the BLER of the PDCCH when the uplink scheduling grant information is not correctly received by the terminal, so that the reception status of the PDCCH can be timely acquired, for the convenience of further improving the reception performance of the PDCCH subsequently on this basis. For example, a power control may be performed for the PDCCH, so as to improve the performance of the PDCCH, or the like.

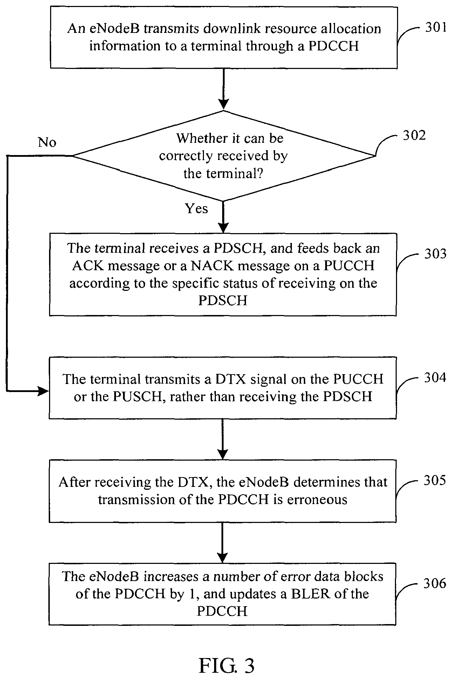

Being different from the previous embodiment, in this embodiment, an example is given by specifically taking downlink scheduling allocation information as the transmission control information. Referring to FIG. 3, the detailed flow may be as follows.

301: an eNodeB transmits downlink resource allocation information to a terminal through a PDCCH.

302: After receiving the downlink resource allocation information, the terminal detects the PDCCH in a UE-specific search space; if the PDCCH is detected as correct, it means that the downlink resource allocation information can be correctly received by the terminal, and then step 303 is performed; while if the PDCCH is detected as incorrect, it means that the downlink resource allocation information cannot be correctly received by the terminal, and then step 304 is performed.

303: If the downlink resource allocation information can be correctly received by the terminal, the terminal finds corresponding downlink resource according to the downlink resource allocation information, receives a PDSCH with the corresponding downlink resource, and feeds back an ACK message or a NACK message on a PUCCH according to the specific status of receiving the PDSCH, i.e., feeds back the ACK message to the eNodeB if the PDSCH can be normally received, and feeds back the NACK message to the eNodeB if the PDSCH cannot be normally received. For the details, please refer to the prior art, and herein are omitted.

304: If the downlink resource allocation information cannot be correctly received by the terminal, the terminal transmits a DTX signal on the PUCCH or the PUSCH, rather than receiving the PDSCH, and then step 305 is performed.

305: After receiving the DTX signal, the eNodeB determines that transmission of the PDCCH is erroneous, and then step 306 is performed.

306: The eNodeB increases a number of error data blocks of the PDCCH by 1, and updates a BLER of the PDCCH according to the number of error data blocks of the PDCCH

From the above content, it can be seen that the embodiment of the present invention detects and tracks the reception performance of the PDCCH by measuring the BLER of the PDCCH when the downlink resource allocation information is not correctly received by the terminal, so that the reception status of the PDCCH can be timely acquired, for the convenience of further improving the reception performance of the PDCCH subsequently on this basis.

Being identical to the above two embodiments, in the present embodiment, the example is still given by specifically taking the eNodeB as the network device, but being different from the above two embodiments, the present embodiment is described by taking the transmission instruction information which specifically is a NACK message as an example.

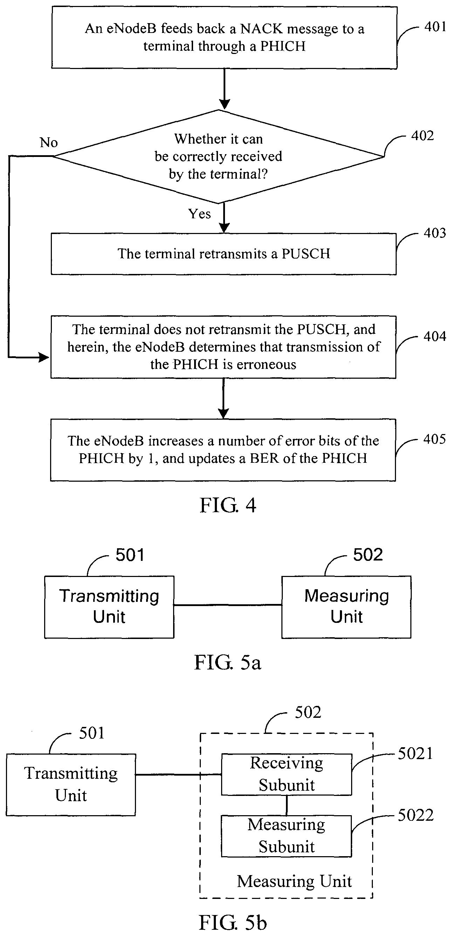

When the NACK message transmitted by the eNodeB through the PHICH is not correctly received by the UE, i.e., the UE mistakes the received NACK message for an ACK message, the terminal does not retransmit the PUSCH with corresponding resource, while the eNodeB retransmits the PUSCH. Meanwhile, the EBR of the PHICH is measured by counting the number of times when the PUSCH CRC is erroneous and the number of times when the MAC LCID is not equal to the expected MAC LCID. Referring to FIG. 4, the detailed process is as follows:
401: When data transmitted by a terminal on a PUSCH is not correctly received by an eNodeB (may refer to the second method embodiment), the eNodeB feeds back a NACK message to the terminal through a PHICH.
402: The terminal receives the NACK message, and if the NACK message can be correctly received by the terminal, step 403 is performed; if the NACK message cannot be correctly received by the terminal, step 404 is performed.
403: The terminal retransmits the PUSCH.
404: The terminal does not retransmit the PUSCH, and herein the eNodeB determines that transmission of the PHICH is erroneous, and then step 405 is performed.

For example, when receiving the NACK message, due to some reason, the terminal mistakes the NACK message for an ACK message, and then the terminal does not retransmit the PUSCH. In that case, the eNodeB detects a CRC error in the resource allocated to the terminal for retransmission of the PUSCH, and the MAC LCID at this time is not equal to the expected MAC LCID, and then the eNodeB determines that transmission of the PHICH is erroneous.

In which, for the related technology for the terminal to retransmit the PUSCH, please refer to the prior art, and herein is omitted.

405: The eNodeB increases a number of error bits of the PHICH by 1, and updates a BER of the PHICH according to the number of error bits of the PHICH.

From the above content, it can be seen that the embodiment of the present invention detects and tracks reception performance of the PHICH by measuring the transmission error information of the PHICH when the NACK message is not correctly received by the terminal, so that the reception status of the PHICH can be timely acquired, for the convenience of further improving the reception performance of the PHICH subsequently on this basis. For example, when a BLER or a BER is measured, some operations may be triggered according to the measured BER, so as to improve the reception performance of the PHICH.

The embodiment of the present invention also correspondingly provides a network device, and as illustrated in FIG. 5a, the network device includes a transmitting unit 501 and a measuring unit 502.

The transmitting unit 501 is configured to transmit transmission control information to a terminal through a PDCCH, or transmit transmission instruction information to the terminal through a PHICH; wherein, the transmission control information may specifically be uplink scheduling grant information or downlink resource allocation information, and the transmission instruction information may specifically be a NACK message or an ACK message, and herein mainly refers to the NACK message.

The measuring unit 502 is configured to determine that the transmission control information transmitted by the transmitting unit 501 is not correctly received by the terminal, and acquire transmission error information of the PDCCH; or, determine that the transmission instruction information transmitted by the transmitting unit 501 is not correctly received by the terminal, and acquire transmission error information of the PHICH.

In which, the acquiring the transmission error information of the PDCCH may include: increasing a number of error data blocks of the PDCCH by 1, and updating a BLER of the PDCCH according to the number of error data blocks of the PDCCH; and the acquiring the transmission error information of the PHICH may include: increasing the number of error bits of the PHICH by 1, and updating a BER of the PHICH according to the number of error bits of the PHICH. That is,
the measuring unit is specifically configured to determine that the transmission control information is not correctly received by the terminal, increase the number of error data blocks of the PDCCH by 1, and update a BLER of the PDCCH according to the number of error data blocks of the PDCCH; or, determine that the transmission instruction information is not correctly received by the terminal, increase the number of error bits of the PHICH by 1, and update a BER of the PHICH according to the number of error bits of the PHICH.

In which, the network device may adopt different ways of measurement for different transmission control information, that is,
the transmitting unit 501 is specifically configured to transmit uplink scheduling grant information to the terminal through the PDCCH.

In that case, the measuring unit 502 is specifically configured to measure the BLER of the PDCCH according to the number of the PUSCH CRC errors and the number of times when a MAC LCID does not meet an expected MAC LCID, when the uplink scheduling grant information transmitted by the transmitting unit 501 is not correctly received by the terminal.

For example, when the uplink scheduling grant information transmitted by the transmitting unit 501 is not correctly received by the terminal, the terminal does not transmit the PUSCH, and in that case, the network device will detect a CRC error with the PUSCH resource allocated to the terminal, and the MAC LCID at this time is not equal to the expected MAC LCID, and then,
the measuring unit 502 is specifically configured to determine that transmission of the PDCCH is erroneous and acquire the transmission error information of the PDCCH, when an erroneous PUSCH CRC is detected and the MAC LCID does not meet the expected MAC LCID, for example, to increase the number of error data blocks of the PDCCH by 1, and update the BLER of the PDCCH according to the number of error data blocks of the PDCCH.

Or, the transmitting unit 501 is also specifically configured to transmit the downlink resource allocation information to the terminal through the PDCCH.

In that case, the measuring unit 502 is specifically configured to measure the BLER of the PDCCH according to DTX information returned by the terminal, when the downlink resource allocation information transmitted by the transmitting unit 501 is not correctly received by the terminal, wherein the DTX information is transmitted by the terminal through the PUCCH or the PUSCH.

For example, when the downlink resource allocation information transmitted by the transmitting unit 501 is not correctly received by the terminal, the terminal returns, on the PUCCH, DTX information to the network device. After receiving the DTX information, the measuring unit 502 can determine that transmission of the PDCCH is erroneous, and then increases the number of error data blocks of the PDCCH by 1 and updates the BLER of the PDCCH according to the number of error data blocks of the PDCCH. That is, it may be as follows.

As illustrated in FIG. 5b, the measuring unit 502 may include a receiving subunit 5021 and a measuring subunit 5022.

The receiving subunit 5021 is configured to receive the DTX information transmitted by the terminal when the downlink resource allocation information transmitted by the transmitting unit 501 is not correctly received by the terminal.

The measuring subunit 5022 is configured to determine that the PUCCH or PUSCH transmission of the PUCCH or PUSCH is erroneous and acquire the transmission error information of the PDCCH, when the receiving subunit 5021 receives the DTX information. For example, the number of error data blocks of the PDCCH may be increased by 1, and the BLER of the PDCCH may be updated according to the number of error data blocks of the PDCCH.

In which, the receiving subunit 5021 is specifically configured to receive, on the PUCCH or the PUSCH, the DTX information transmitted by the terminal.

Or, the transmitting unit 501 is also specifically configured to transmit a NACK message to the terminal through the PHICH.

In that case, the measuring unit 502 is specifically configured to measure the BER of the PHICH according to the number of the PUSCH CRC errors and the number of times when the MAC LCID does not meet the expected MAC LCID, when the NACK message transmitted by the transmitting unit 501 is not correctly received by the terminal.

For example, when the NACK message transmitted by the transmitting unit 501 is not correctly received by the terminal, i.e., the terminal mistakes the received NACK message for an ACK message, it does not do PUSCH retransmission with corresponding resource. In that case, the network device detects an erroneous PUSCH CRC, and the MAC LCID does not meet the expected MAC LCID, and then,
the measuring unit 502 is specifically configured to determine that transmission of the PHICH is erroneous and acquire transmission error information of the PHICH, when an erroneous PUSCH CRC is detected and the MAC LCID does not meet the expected MAC LCID. For example, the number of error bits of the PHICH may be increased by 1, and a BER of the PHICH may be updated according to the number of error bits of the PHICH.

For the implementations of the above respective units, please refer to the aforementioned method embodiments, and herein are omitted.

The network device may specifically be an eNodeB or other transmitting station.

From the above content, it can be seen that the measuring unit 502 of the network device in the embodiment may detect and track the reception performance of the PDCCH or the PHICH by measuring the transmission error information of the PDCCH or the transmission error information of the PHICH when the transmission control information or the transmission instruction information transmitted by the transmitting unit 501 is not correctly received by the terminal, so that the reception status of the PDCCH or the PHICH can be timely acquired, for the convenience of further improving the reception performance of the PDCCH or the PHICH subsequently on this basis. For example, when a BLER or BER is measured, some operations may be triggered according to the measured BLER or BER, so as to improve the reception performance of the PDCCH or the PHICH.

A person skilled in the art shall appreciate that all or a part of steps in the methods of the above embodiments may be implemented by instructing relevant hardware through a program that may be stored in a computer readable storage medium, including Read Only Memory (ROM, Read Only Memory), Random Access Memory (RAM, Random Access Memory), magnetic disk, optical disk, etc.

A method for measuring transmission error information and a network device provided by the embodiments of the present invention are detailedly introduced as above. The principle and the implementations of the present invention are elaborated through specific examples. The descriptions of the above embodiments are only used to promote the understanding of the method and core idea of the present invention. Meanwhile, a person skilled in the art may change the implementations and the application range according to the idea of the present invention. In conclusion, the contents of the present specification shall not be construed as limitations to the present invention.

Further embodiments of the present invention are provided in the following. It should be noted that the numbering used in the following section does not necessarily need to comply with the numbering used in the previous sections.
Embodiment 1. A method for measuring transmission error information, comprising:
   transmitting transmission control information to a terminal through a physical downlink control channel, PDCCH;
   determining that the transmission control information is not correctly received by the terminal, and acquiring transmission error information of the PDCCH.
Embodiment 2. The method according to embodiment 1, wherein,
   the acquiring the transmission error information of the PDCCH comprises: increasing a number of error data blocks of the PDCCH by 1, and updating a block error rate, BLER, of the PDCCH according to the number of error data blocks of the PDCCH.
Embodiment 3. The method according to embodiment 1 or 2, wherein,
   the transmitting the transmission control information to the terminal through the PDCCH comprises: transmitting uplink scheduling grant information to the terminal through the PDCCH; and
   the determining that the transmission control information is not correctly received by the terminal comprises: determining that transmission of the PDCCH is erroneous, when an erroneous cyclic redundancy check, CRC, of a physical uplink shared channel, PUSCH, is detected and a media access control, MAC, logic channel identifier, LCID, does not meet an expected MAC LCID.
Embodiment 4. The method according to embodiment 1 or 2, wherein the transmitting the transmission control information to the terminal through the PDCCH comprises: transmitting downlink resource allocation information to the terminal through the PDCCH; and
   the determining that the transmission control information is not correctly received by the terminal comprises: when discontinuous transmission, DTX, information transmitted by the terminal is received, determining that transmission of the PDCCH is erroneous according to the DTX information.
Embodiment 5. The method according to embodiment 4, wherein,
   the DTX information is transmitted by the terminal through a physical uplink control channel, PUCCH or a PUSCH.
Embodiment 6. A method for measuring transmission error information, comprising:
   transmitting transmission instruction information to a terminal through a physical hybrid automatic repeat request indicator channel, PHICH; and
   determining that the transmission instruction information is not correctly received by the terminal, and acquiring transmission error information of the PHICH.
Embodiment 7. The method according to embodiment 6, wherein the acquiring the transmission error information of the PHICH comprises: increasing a number of the PHICH error bits by 1, and updating a Bit Error Rate (BER) of the PHICH according to the number of the PHICH error bits.
Embodiment 8. The method according to embodiment 6 or 7, wherein the transmitting the transmission instruction information to the terminal through the PHICH comprises: transmitting a negative acknowledgement, NACK, message to the terminal through the PHICH; and
   the determining that the transmission instruction information is not correctly received by the terminal comprises: determining that transmission of the PHICH is erroneous, when an erroneous cyclic redundancy check, CRC, of a physical uplink shared channel, PUSCH, is detected and a media access control, MAC, logic channel identifier, LCID, does not meet an expected MAC LCID.
Embodiment 9. A network device, comprising:
   a transmitting unit configured to transmit transmission control information to a terminal through a physical downlink control channel, PDCCH; and
   a measuring unit configured to determine that the transmission control information is not correctly received by the terminal, and acquire transmission error information of the PDCCH.
Embodiment 10. The network device according to embodiment 9, wherein,
   the measuring unit is specifically configured to determine that the transmission control information is not correctly received by the terminal, increase a number of error data blocks of the PDCCH by 1, and update a block error rate, BLER, of the PDCCH according to the number of error data blocks of the PDCCH.
Embodiment 11. The network device according to embodiment 9 or 10, wherein,
   the transmitting unit is specifically configured to transmit uplink scheduling grant information to the terminal through the PDCCH; and
   the measuring unit is specifically configured to determine that transmission of the PDCCH is erroneous, when an erroneous cyclic redundancy check, CRC, of a physical uplink shared channel, PUSCH is detected and a media access control, MAC, logic channel identifier, LCID, does not meet an expected MAC LCID, increase the number of error data blocks of the PDCCH by 1, and update a BLER of the PDCCH according to the number of error data blocks of the PDCCH.
Embodiment 12. The network device according to embodiment 9 or 10, wherein the measuring unit comprises a receiving subunit and a measuring subunit;
   the transmitting unit is specifically configured to transmit downlink resource allocation information to the terminal through the PDCCH;
   the receiving subunit is configured to receive discontinuous transmission, DTX, information transmitted by the terminal; and
   the measuring subunit is configured to determine that transmission of the PDCCH is erroneous according to the DTX information when the receiving subunit receives the DTX information, increase the number of error data blocks of the PDCCH by 1, and update the BLER of the PDCCH according to the number of error data blocks of the PDCCH.
Embodiment 13. The network device according to embodiment 12, wherein,
   the receiving subunit is specifically configured to receive the DTX information transmitted by the terminal on a physical uplink control channel, PUCCH, or a PUSCH.
Embodiment 14. The network device according to any one of embodiments 9 to 13, wherein,
   the network device is specifically an eNodeB.
Embodiment 15. A network device, comprising:
   a transmitting unit configured to transmit transmission instruction information to a terminal through a physical hybrid automatic repeat request indicator channel, PHICH; and
   a measuring unit configured to determine that the transmission instruction information is not correctly received by the terminal, and acquire transmission error information of the PHICH.
Embodiment 16. The network device according to embodiment 15, wherein,
   the measuring unit is specifically configured to determine that the transmission instruction information is not correctly received by the terminal, increase a number of the PHICH error bits by 1, and update a Bit Error Rate (BER) of the PHICH according to the number of the PHICH error bits.
Embodiment 17. The network device according to embodiment 15 or 16, wherein,
   the transmitting unit is specifically configured to transmit a negative acknowledgement (NACK) message to the terminal through the PHICH; and
   the measuring unit is specifically configured to determine that transmission of the PHICH is erroneous, when an erroneous cyclic redundancy check, CRC, of a physical uplink shared channel, PUSCH, is detected and a media access control, MAC, logic channel identifier, LCID, does not meet an expected MAC LCID, increase the number of error bits of the PHICH by 1, and update a BER of the PHICH according to the number of error bits of the PHICH.
Embodiment 18. The network device according to any of embodiments 15 to 17, wherein, the network device is specifically an eNodeB.

## Claims

1. A method for measuring transmission error information, comprising:
transmitting (101) transmission control information to a terminal through a physical downlink control channel, PDCCH, wherein the transmission control information comprises downlink resource allocation information;
determining (102) that the transmission control information is not correctly received by the terminal; and
acquiring (102) transmission error information of the PDCCH;
wherein the determining (102) that the transmission control information is not correctly received by the terminal comprises: when discontinuous transmission, DTX, information transmitted by the terminal is received, determining (305) that transmission of the PDCCH is erroneous according to the DTX information.

2. The method according to claim 1, wherein,
the acquiring (102) the transmission error information of the PDCCH comprises: increasing (205, 306) a number of error data blocks of the PDCCH by 1, and updating (205, 306) a block error rate, BLER, of the PDCCH according to the number of error data blocks of the PDCCH.

3. The method according to claim 1 or 2, wherein,
the DTX information is transmitted by the terminal through a physical uplink control channel, PUCCH or a physical uplink shared channel, PUSCH.

4. A network device, comprising:
a transmitting unit (501) configured to transmit transmission control information to a terminal through a physical downlink control channel, PDCCH; and
a measuring unit (502) configured to determine that the transmission control information is not correctly received by the terminal, and acquire transmission error information of the PDCCH;
wherein the measuring unit (502) comprises a receiving subunit (5021) and a measuring subunit (5022);
the transmitting unit (501) is specifically configured to transmit downlink resource allocation information to the terminal through the PDCCH;
the receiving subunit (5021) is configured to receive discontinuous transmission, DTX, information transmitted by the terminal; and
the measuring subunit (5022) is configured to determine that transmission of the PDCCH is erroneous according to the DTX information when the receiving subunit receives the DTX information.

5. The network device according to claim 4, wherein,
the measuring unit (502) is specifically configured to determine that the transmission control information is not correctly received by the terminal, increase a number of error data blocks of the PDCCH by 1, and update a block error rate, BLER, of the PDCCH according to the number of error data blocks of the PDCCH.

6. The network device according to claim 4 or 5, wherein,
the receiving subunit (5021) is specifically configured to receive the DTX information transmitted by the terminal on a physical uplink control channel, PUCCH, or a physical uplink shared channel, PUSCH.

7. The network device according to any one of claims 4 to 6, wherein,
the network device is specifically an eNodeB.
